# EUROPEAN PATENT APPLICATION

(11) **EP 1 674 778 A1**
(43) Date of publication of application: **28.06.2006**
(21) Application number: 05112427.9
(22) Date of filing: 19.12.2005
(51) Int. Cl.: F16L 3/23

(54) **Pipe support and method of installation**

(30) Priority: 22.12.2004 US 21909
(71) Applicant: Erico International Corporation, Solon, Ohio 44139 (US)
(72) Inventor: Lynch, Jr., Edward J., Akron OH Ohio 44313 (US); Lees, Richard W., Stow OH Ohio 44224 (US)
(74) Representative: Gille Hrabal Struck Neidlein Prop Roos

(57) **Abstract**

A pipe support includes a base (14), and a clamp (12) that fits onto a protrusion (36) of the base. The clamp (12) and the base protrusion (36) have opposed rigid pipe-receiving surfaces, thus defining a pipe-receiving area (64,124) or region between the surfaces. In this area one or more pipes of various sizes may be removably secured. Asymmetric teeth (82,130) on both the protrusion (36) and legs of the clamp (12), may be utilized to secure the clamp to the protrusion of the base. The base has a flat bottom (40) for resting flat along a flat surface, such as a roof or ceiling surface (26). The flat bottom may have an upturned lip (42) to prevent damaging of the flat surface during installation of the pipe support. The flat bottom may also have drainage passages (44,46) or a channel that may facilitate drainage of rainwater off of the top side of the flat bottom.

## Description

### BACKGROUND OF THE INVENTION

### TECHNICAL FIELD OF THE INVENTION

The invention relates to pipe supports for securing pipes and other types of tubing. In particular, the invention relates to a pipe support that may be used to secure pipes running along a roof.

### DESCRIPTION OF THE RELATED ART

There is a general need to provide support for rooftop piping systems, such as electrical conduits or natural gas piping. The supports must elevate the piping enough to clear common rooftop obstacles (like expansion joints and seams). The elevation also serves to keep the piping from lying directly in standing water. In addition, the supports often need to be free-floating, to avoid penetrating the roof membrane as well as to accommodate movement in the piping system due to expansion or contraction in the piping due to extreme temperature fluctuations. Currently the most common method of providing support is to use short lengths of pressure-treated lumber (typically a nominal 4 x 4), attaching the pipe to the lumber using commonly available 1- or 2-hole pipe straps. There are a number of possible issues with this method of support: 1) the wood may rot to the extent that it is no longer providing the necessary support; 2) the hardware may rust; 3) the wood may rupture the roof membrane; 4) the wood may be heavy and difficulty to move; and/or 5) additional tools (saw and screwdriver or socket wrenches) may be required for installation.

From the foregoing it will be seen that improvements in piping supports for rooftops and other applications, would be desirable.

### SUMMARY OF THE INVENTION

A pipe support, in accordance with the present invention, includes a clamp and a base, where the clamp and the base may be reversibly engaged with one another without use of tools.

According to another aspect of the invention, a pipe support includes a clamp and a base secured by respective rows of asymmetric teeth having a ratcheting engagement.

According to yet another aspect of the invention, a pipe support includes a clamp having legs that pass into channels of a protrusion on a base, where the legs are separably engaged in the channels.

According to still another aspect of the invention, a rooftop pipe support includes a base for placement on a roof, wherein the base has a protrusion with a recessed, pipe-receiving surface at a distal end from a bottom of the base. The pipe-receiving surface may have curved ends to facilitate retaining pipes therein, prior to engagement of the base by a clamp.

According to a further aspect of the invention, a pipe support has non-metallic curved edges on a bottom surface to facilitate installation, such as on a roof, without damaging the roof surface. The base may also have drainage channels to prevent accumulation of water on a bottom surface that is bordered by the upturned curved ends.

According to another aspect of the invention, a pipe support includes: a base having planar bottom and a protrusion extending from the planar bottom; and a clamp that separably engages the base. The base and the clamp have respective rigid pipe-receiving surfaces for securing one or more pipes in a pipe-receiving region between the surfaces.

According to still another aspect of the invention, a pipe support includes a base having a planar bottom and a protrusion extending from the planar bottom; and a clamp that separably engages the base. The base and the clamp may have respective rigid pipe-receiving surfaces for securing one or more pipes in a pipe-receiving region between the surfaces. The clamp may include a bar, and a pair of legs attached to the bar. The legs may separably engage opposite sides of the protrusion to secure the clamp to the base. The legs have toothed inner surfaces that engage respective toothed outer surfaces of the protrusion. The toothed inner surfaces of the legs and the toothed outer surfaces of the base may all have asymmetric teeth. The asymmetric teeth may be configured so as to allow the toothed inner surfaces of the legs to slide against the toothed outer surfaces of the protrusion as the pipe-receiving surfaces are brought together. The asymmetric teeth may be configured to lock the toothed inner surfaces of the legs against the toothed outer surfaces of the protrusion as the pipe-receiving surfaces are moved apart. The protrusion may have channels about the toothed outer surfaces. The channels are in communication with openings of the protrusion into which the legs are inserted. The legs may have grip tabs on outer surfaces thereof. Pulling the grip tabs outward, away from the protrusion, may disengage the inner toothed surfaces of the legs from the outer toothed surfaces of the protrusions.

According to a further aspect of the invention, a method of securing one or more pipes includes the steps of: placing the pipes and a base of a pipe support such that the pipes are on a pipe-receiving surface of the base; and separably engaging the base with a clamp of the pipe support, such that the pipes are secured between respective pipe-receiving surfaces of the base and the clamp.

To the accomplishment of the foregoing and related ends, the invention comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF THE DRAWINGS

In the annexed figures, which are not necessarily to scale:

Fig. 1 is an oblique view of a pipe support in accordance with the present invention, used to support to a pair of pipes on a rooftop;

Fig. 2 is an exploded version of the pipe support of Fig. 1;

Fig. 3 is an oblique view of the base of the pipe support of Fig. 1, emphasizing a view of the top parts of the base;

Fig. 4 is another oblique view of the base of the pipe support of Fig. 1, emphasizing the side parts of the base;

Fig. 5 is still another oblique view of the pipe support of Fig. 1, showing details of the bottom of the base;

Fig. 6 is a cross-sectional detailed view, showing details of the configuration of a lip of the opening of the base of Figs. 3-5;

Fig. 7 is an oblique view of the clamp of the pipe support of Fig. 1;

Fig. 8 is a detailed cross-sectional view showing engagement of the teeth of the clamp and base of the pipe support of Fig. 1;

Figs. 9-11 are end views showing various pipe configurations secured by the pipe support of Fig. 1;

Fig. 12 illustrates use of the pipe support of Fig. 1 secured to a ceiling;

Fig. 13 shows an alternative embodiment base for use as part of a pipe support in accordance with the present invention; and

Fig. 14 is a cross-sectional view of an alternative embodiment pipe support in accordance with the present invention, utilizing an extension to increase the height of the pipe support;

Fig. 15 is an oblique view of the extension of the pipe support of Fig. 14;

Fig. 16 is an oblique view of a base of another embodiment of a pipe support in accordance with the present invention;

Fig. 17 is an end view a metal insert of the base of Fig. 18;

Fig. 18 is an oblique view of a prior art clamp that usable with the base of Fig. 16; and

Fig. 19 is an oblique view of a pipe support that includes the base of Fig. 16 and the clamp of Fig. 18.

### DETAILED DESCRIPTION

A pipe support, particularly useful for supporting pipes running along flat surfaces, such as roofs, includes a base, and a clamp that fits onto a protrusion of the base. The clamp and the base protrusion have opposed rigid pipe-receiving surfaces, thus defining a pipe-receiving area or region between the surfaces. In this area one or more pipes of various sizes may be removably secured. Asymmetric teeth on both the protrusion and legs of the clamp, may be utilized to secure the clamp to the protrusion of the base. The base has a flat bottom for resting flat along a flat surface, such as a roof or ceiling surface. The flat bottom may have an upturned lip to prevent damaging of the flat surface during installation of the pipe support. The flat bottom may also have drainage passages or a channel that may facilitate drainage of rainwater off of the top side of the flat bottom. The pipe support is adjustable, and is able to accommodate a large range of number and size of pipes in the pipe-receiving region. An extension may be used to engage the protrusion of the base, and to thereby increase height of the pipe support. The pipe support may be installed easily, without use of tools. In addition, the clamp is easily separable from the base, allowing removal of the pipe support without use of tools. The parts of the pipe support (the base and the clamp) may be made of molded plastic.

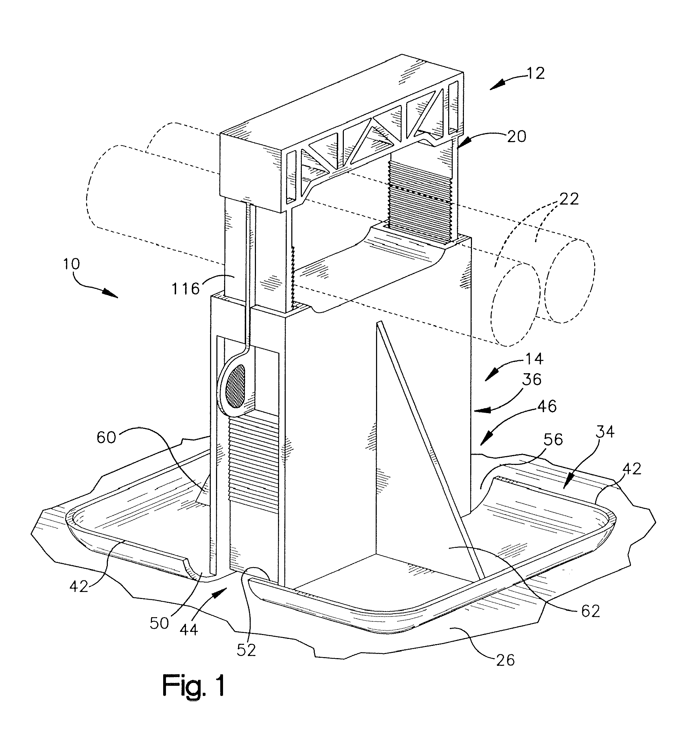

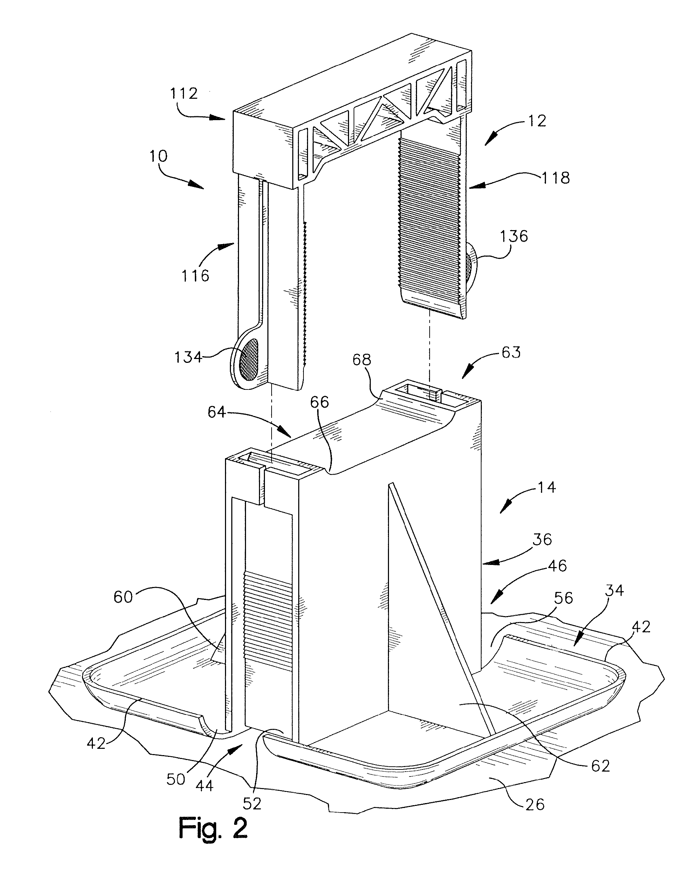

Referring initially to Figs. 1 and 2, a pipe support includes a clamp 12 and a base 14. The clamp 12 and the base 14 are separately coupled together to define between them a pipe-receiving region 20. One or more pipes 22 may pass through the pipe-receiving region 20, and may be secured between the clamp 12 and the base 14. The height of the pipe-receiving region 20 may be adjusted by moving the clamp 12 relative to the base 14. Thus, pipes 22 of different heights may be accommodated in the pipe support 10. The pipe support 10 may be installed on a roof or other surface 26 either before or after placement of the pipes 22.

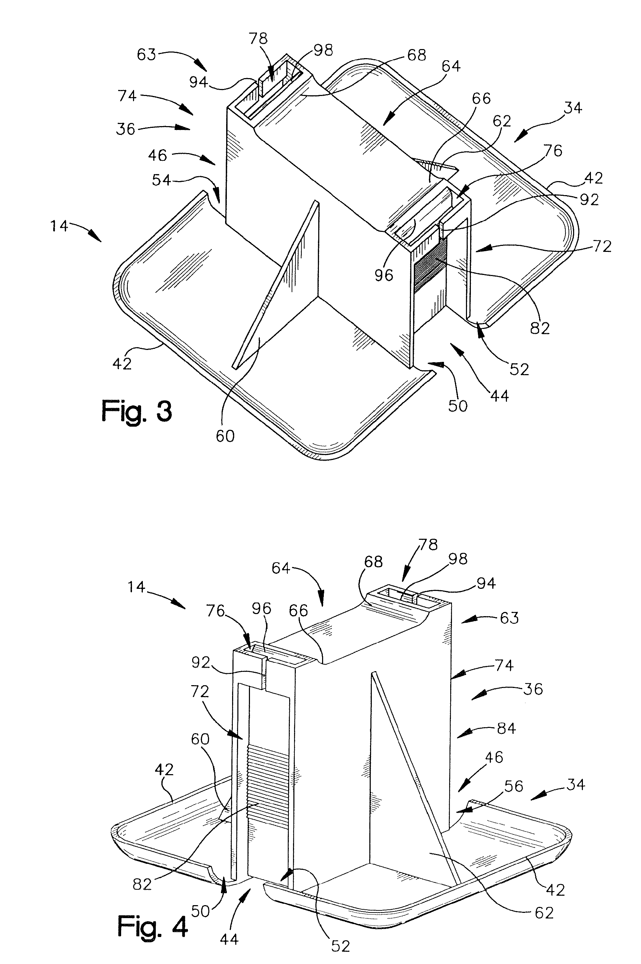

Referring now in addition to Figs. 3-5, the base 14 includes a generally planar bottom 34, and an upward protrusion 36 that protrudes upward from the bottom 34. The underside of the bottom 34 includes a flat contact surface 40 for pressing against the roof 26 or other surface. The bottom 34 includes an upturned lip 42 along its outer edge. The upturned lip 42 provides a curved surface along the outer edge of the bottom 34. This curved surface aids in preventing the bottom 34 from catching on parts of the roof 26 or other surface, and thus aids in preventing damage to the roof 26 or other surface upon which the clamp 10 is installed. The bottom 34 has a pair of cutouts 44 and 46 on opposite sides of the protrusion 36. These cutouts 44 and 46 allow drainage of rainwater or other liquids through drain passages 50, 52, 54, and 56. This helps prevent accumulation of rainwater or other liquids on the top of the bottom 34.

The protrusion 36 is supported by a pair of braces 60 and 62, which are integrally formed with the bottom 34 and with the protrusion 36. The braces 60 and 62 are shown as having a triangular shape, but may alternatively have other suitable shapes. At a distal end 63 from the bottom 34, the protrusion 36 has a pipe-receiving upper surface or ledge 64. The ledge 64 has a concave shape with curved ends 66 and 68 at either side. The curved ends 66 and 68 aid in retaining the pipes 22 on the ledge 64. This may be especially useful during installation of the pipe support 10, prior to engagement of the clamp 12 onto the base 14.

Outward of the curved ends 66 and 68, the protrusion 36 has a pair of channels 72 and 74, with respective openings 76 and 78 for receiving the parts of the clamp 12. The channels 72 and 74 have toothed surfaces 82 and 84 for engaging corresponding toothed surfaces in the clamp 12. The engagement of the toothed surfaces 82 and 84 with those of the clamp 12 is used to retain the clamp 12 in place relative to the base 14. At the top of the protrusion 36 (the distal end, farthest from the bottom 34), the channels 72 and 74 have the openings 76 and 78 fully enclosed except for slots 92 and 94.

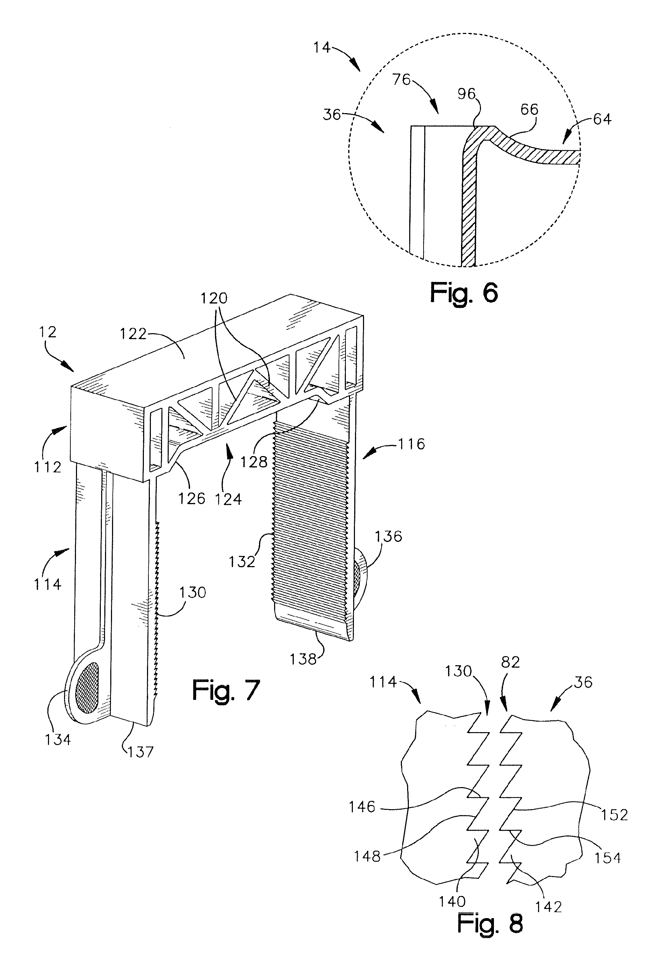

As seen in detail in Fig. 6, the curved ends 66 and 68 blend into a curved lip 96 and 98 where they adjoin the openings 76 and 78. The curved lips 96 and 98 aid in directing portions of the clamp 12 in through the openings 76 and 78.

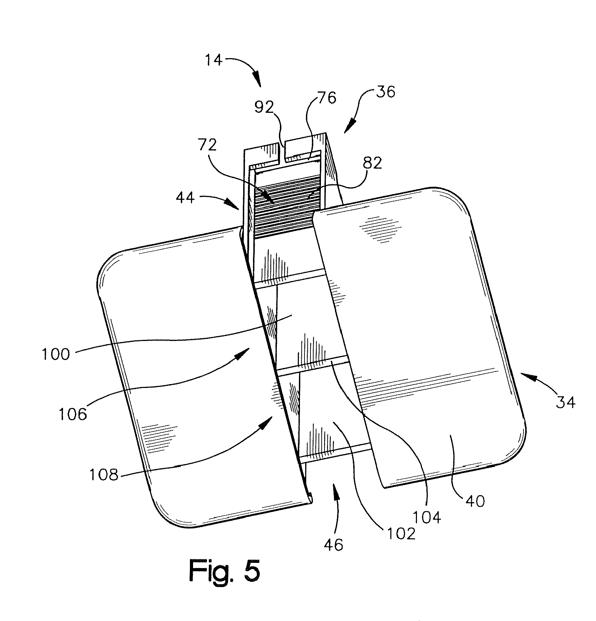

As best seen in Fig. 5, the protrusion 36 has a pair of hollows 100 and 102 within, separated by an internal wall 104. The hollows 100 and 102 are open at the bottom of the protrusion 36, at openings or holes 106 and 108. The hollows 100 and 102, with their openings 106 and 108, provide a way for rainwater and other debris to not be accumulated within the protrusion 36. In addition, the protrusion 36 being to a large extent hollow, the amount of material utilized for the protrusion 36 is reduced. The internal wall 104 provides some structure that aids in retaining the integrity of the protrusion 36. It will be appreciated that alternatively a variety of other suitable configurations of hollows and internal walls may be utilized.

With reference in addition to Fig. 7, further details are now described of the clamp 12 and its engagement with the base 14. The clamp 12 includes a horizontal bar or truss 112, and a pair of legs 114 and 116. The horizontal bar 112 is largely hollow, with internal structural members 120 that maintain its structural integrity. The bar 112 has a top surface 122, which is used to press the clamp 12 down into engagement with the base 14. The bar 112 also has a bottom contact surface 124, which is used to engage the pipes 22 (Fig. 1), and to define one border of the pipe-receiving region 20 (Fig. 1). The bottom contact surface 124 has a concave shape, with a pair of curved ends 126 and 128. The curved ends 126 and 128 are similar in function to the curved ends 66 and 68 of the ledge 64 of the base 14. That is, the curved ends 126 and 128 may aid in receiving, positioning, and retaining the pipes 22.

The legs 114 and 116, which are integrally formed with the bar 112, have respective toothed inner surfaces 130 and 132, and respective grip tabs 134 and 136. The toothed surfaces 130 and 132 engage the toothed surfaces 82 and 84 of the protrusion 36 of the base 14, to lock the clamp 12 in place relative to the base 14. The grip tabs 134 and 136 protrude outward from the legs 114 and 116, and are used to deflect the legs 114 and 116 outward, to disengage the toothed surfaces of the clamp 12 and the base 14, to allow repositioning of the clamp 12 relative to the base 14, and/or to allow separation of the clamp 12 from the base 14.

The legs 114 and 116 have sloped distal, free ends 137 and 138. The sloped ends 137 and 138 aid, in combination with the lips 96 and 98 of the base 14 (Fig. 6), in directing the legs 114 and 116 into the openings 76 and 78 of the base 14, when the clamp 12 is coupled to the base 14.

Fig. 8 shows details of the engagement of the toothed surface 130 of the clamp 12 with the toothed surface 82 of the base 14. The teeth 140 of the toothed surface 130 and the teeth 142 of the toothed surface 82 are both asymmetric. The asymmetry allows the toothed surface 130 to preferentially slide against the toothed surface 82 to allow insertion of the legs 114 and 116 into the openings 76 and 78 of the base 14. The asymmetric design of the teeth 140 and 142 locks the clamp 12 into place relative to the base 14, retaining engagement of the clamp 12 to the base 14 until the grips 134 and 136 are pulled outward to disengage the corresponding toothed surfaces of the clamp 12 and the base 14. The teeth 140 each have an upper surface 146 that may be substantially perpendicular to the structure of the leg 114, and a sloped lower surface 148. The teeth 142 of the toothed surface 82 of the base 14 have a corresponding mating shape, for example, having a sloped upper surface 152, and a lower surface 154 that is substantially perpendicular to the main portion of the protrusion 36 of the base 14.

Both the clamp 12 and the base 14 may be made of plastic, and may be made in suitable molding processes. The clamp 12 and the base 14 may be made of a rigid thermoplastic, or may be made of a suitable thermoset plastic. In addition, some glass fill may be added to the thermoplastic or thermoset plastic in order to increase strength of the product. Other suitable additives may be added to the thermoplastic or thermoset plastic. As an example, the device may be molded from engineering-grade ABS thermoplastic that contains both UV inhibitors and flame retardants.

Insulation of the pipe support 10 may be done as follows. After placement of one or more pipes 22 that need support, the base 14 may be placed underneath the pipes 22 at a suitable location. That is, the base 14 may be tipped and moved underneath the pipes 22, and then straightened so that the contact surface 40 is flat against the roof 26 or other structure used to support the pipe clamp 10. If desired, an adhesive may be applied to the contact surface 40 and/or to the roof 26 or other structure, to adhesively hold the base 14 in place.

Then the clamp 12 is coupled to the base 14. The legs 114 and 116 of the clamp 12 are inserted into the openings 76 and 78 of the protrusion 36 of the base 14. As noted earlier, the sloped ends 137 and 138 of the legs 114 and 116, and the lips 96 and 98 of the protrusion 36, aid in directing the legs 114 and 116 through the openings 76 and 78 into the channels 72 and 74 of the base 14. The grip tabs 134 and 136 pass through the slots 92 and 94 as the legs 114 and 116 are inserted into the openings 76 and 78. The toothed surfaces 130 and 132 of the clamp 12 slide against the corresponding toothed surfaces 82 and 84 of the base 14. Pressure may be applied on the top surface 122, such as by pushing by hand, until the contact surface 124 of the clamp 12 is securely against the pipes 22.

Once the clamp 12 is fully pressed into the base 14, securing the pipes 22 in place, the combined action of the toothed surfaces 82, 84, 130 and 132, retain the clamp 12 in place. If adjustment or removal of the clamp 12 is desired, the tab grips 134 and 136 may be pulled outward, thus disengaging the toothed surfaces 130 and 132 of the clamp 12 from the corresponding toothed surfaces 82 and 84 of the base 14. As the outward force on the grip tabs 134 and 136 is maintained, the clamp 12 may be pulled upward, and in fact may be totally disengaged from the base 14.

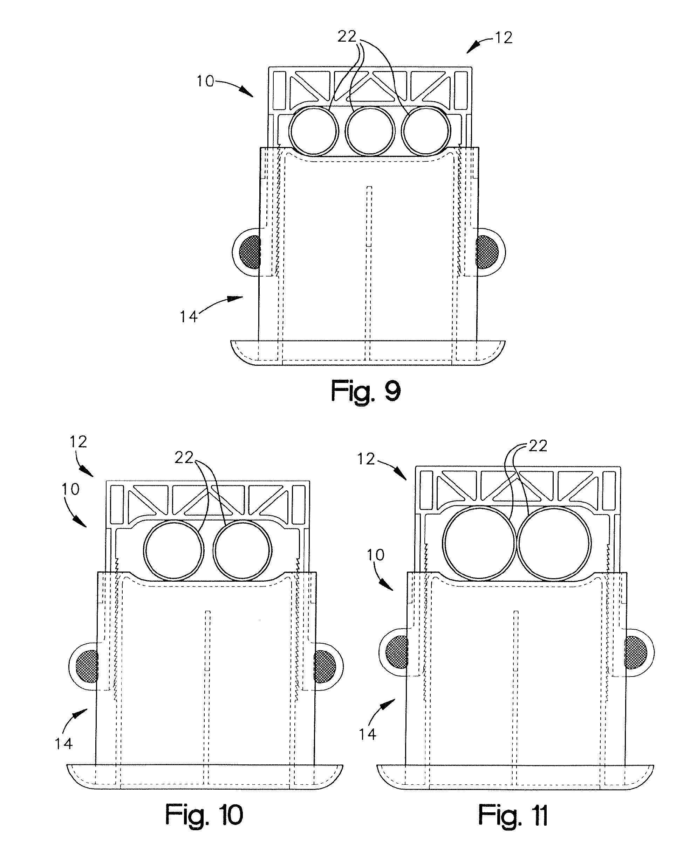

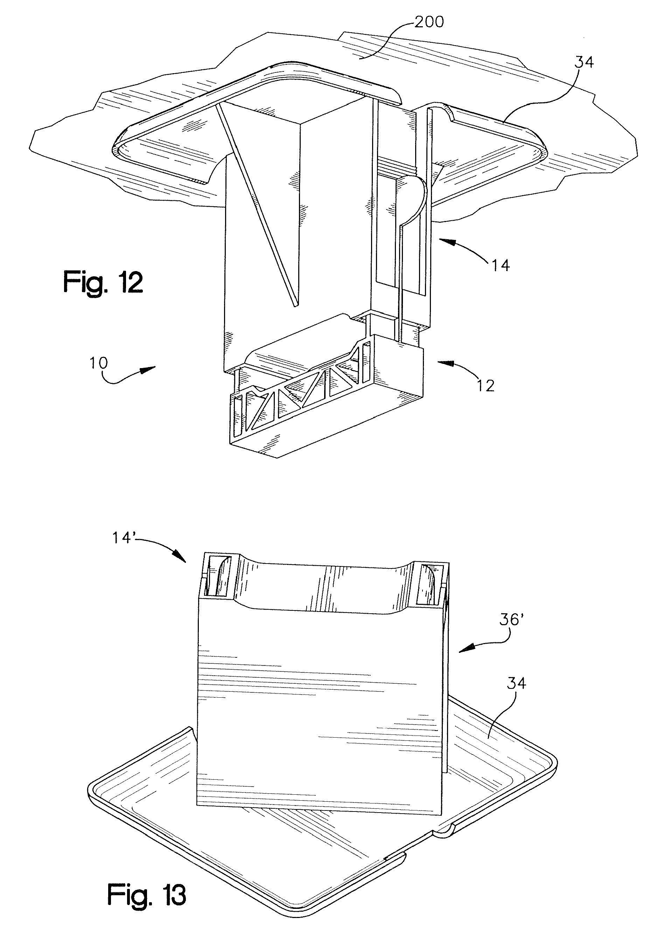

Figs. 9-11 show several possible pipe configurations secured by the pipe clamp 10. As shown in Fig. 9, the pipe clamp 10 may be used to secure three small-sized pipes 22. Alternatively, as shown in Figs. 10 and 11, the pipe clamp 10 may be used to secure two larger-sized pipes 22. It will be appreciated that a wide variety of pipe configurations may be secured, including configurations securing pipes of different sizes with a single support 10.

The pipe clamp 10 may be able to fit a range of multiple pipe sizes of pipe, such as pipes 22 with diameters of 12.7 mm (0.5 inches), 19.1 mm (0.75 inches), or 25.4 mm (1 inch), for example. It will be appreciated that other suitable pipe sizes may be employed with suitably-sized pipe clamps.

Fig. 12 shows another possible use for the pipe clamp 10. As shown in the figure, the pipe clamp 10 may be employed in an upside-down configuration, relative to that described above, with the bottom 34 of the base 14 secured to the bottom side of a ceiling 200. Securement of the base 14 to the ceiling 200 may be made by use of a suitable adhesive, or by use of suitable fasteners, such as screws, bolts, etc., through suitable holes made in the bottom 34.

Fig. 13 illustrates an alternative configuration for the base 14', capable of handling larger numbers of pipes, and/or larger sizes of pipes. The protrusion 36' of the alternative base 14' is placed diagonally across the bottom 34.

The clamp 10 described above offers many advantageous features. First of all, the clamp 10 fits multiple sizes of pipe, and may be used to support multiple runs of pipe. Second, the clamp 10 requires no additional hardware (such as fasteners or tools) for most installations. Third, the clamp 10 allows for slight movements of the pipe 22, such as for example, from thermal expansion and contraction. Fourth, the pipe clamp 10 is configured with the drainage passages 50-56, such that the base 14 does not collect water. In addition, the holes 106 and 108 drain any water that happens to find its way into the hollows 100 and 102 of the protrusion 36. Further, the clamp 10 requires no tools to install, and no tools to service, and may be adhered to a rooftop, floor, or ceiling, or other surface, if so desired with commercial adhesives. The sloped ends 137 and 138 of the legs 114 and 116, and the curved lips 96 and 98, aid in directing the legs 114 and 116 through the openings 76 and 78, as described above. Also, advantageous are the finger grips (tabs) 134 and 136, which may be easily manipulated by a user, even when the dexterity of the user is limited, such as when the user (such as an installer) is wearing gloves. The recessed receiving surface or ledge 64 of the base 14, with its curved ends 66 and 68, aids in retaining the pipes 22 in proper place, prior to installation of the clamp 12 into engagement with the base 14.

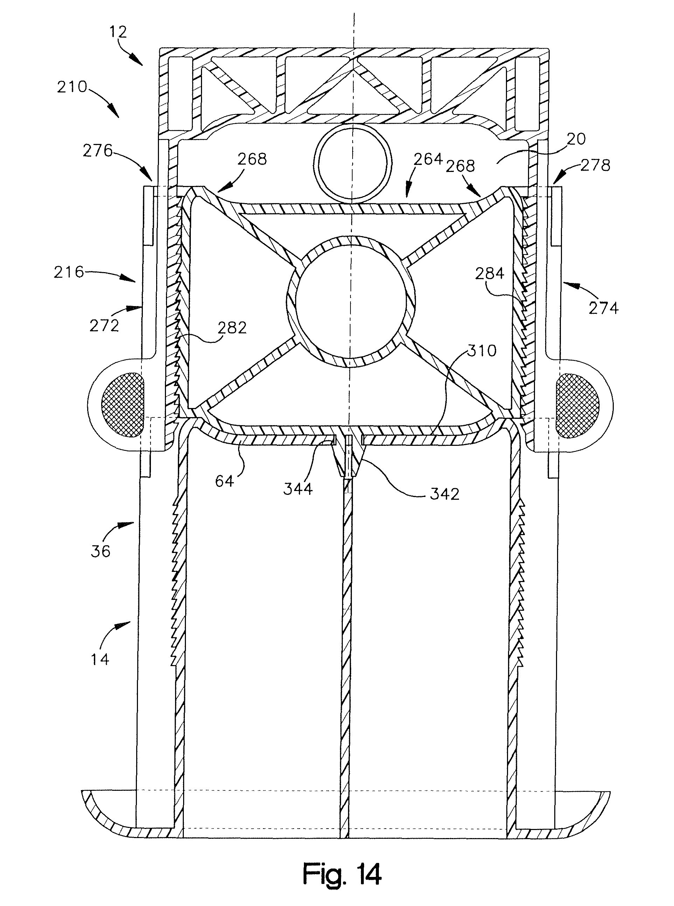

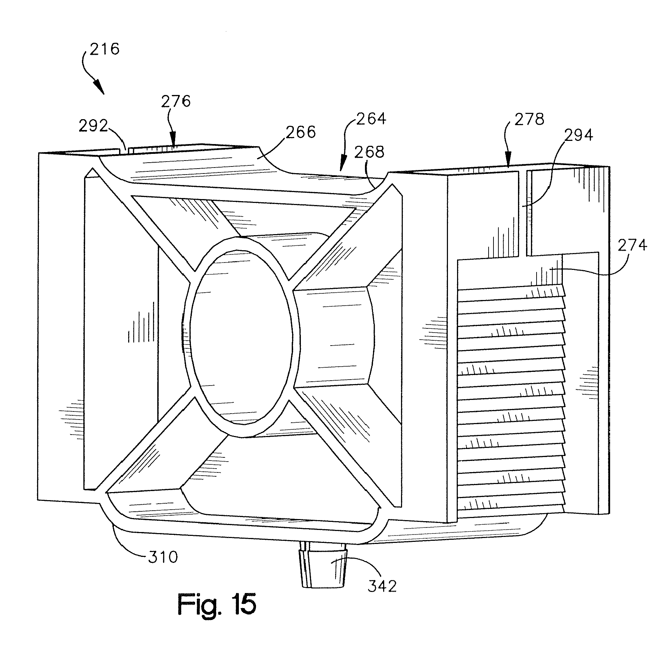

Turning now to Figs. 14 and 15, an alternate embodiment pipe support 210 includes an extension 216. The extension 216 fits onto the protrusion 36 of the base 14, thereby effectively increasing the height of a pipe-receiving region 220 over a roof or other surface upon which the pipe support 210 is mounted. The extension 216 has a pipe-receiving upper surface or a ledge 264, curved ends 266 and 268, channels 272 and 274, openings 276 and 278, toothed surfaces 282 and 284, and slots 292 and 294. All of these features may correspond in size and general layout to corresponding features of the protrusion 36 of the base 14 (Figs. 3-5).

The extension 216 may be made of molded plastic, and may have a height roughly half that of the protrusion 36, although it will be appreciated that the extension 216 may have other suitable heights, and that a variety of different height extensions may be used to achieve different overall heights of the combination of the base 14 and the extension 216. The extension 216 has a curved convex bottom surface 310 that may correspond to and fit into the upper concave surface or ledge 64 of the base 14. A protrusion 342 of the extension 216 may fit into a corresponding recess or hole 344 of the protrusion 36. This aids in maintaining stability of the combination of the extension 216 and the base 14, and also may be used to prevent employment of multiple extensions 216, as the upper surface 264 of the extension 216 lacks anything corresponding to the recess 344.

The clamp 12 fits into and engages the extension 216 in a manner corresponding to that described above for the engagement of the clamp 12 and the base 14. That is, the toothed surfaces 282 and 284 of the extension 216 may engage the corresponding toothed surfaces 130 and 132 of the clamp 12. Once this engagement is made, the clamp 12 is locked in place relative to the extension 216, until the grip tabs 134 and 136 are moved outward, causing the legs 114 and 116 of the clamp 12 to bend, and the toothed surfaces 130 and 132 of the clamp 12 to disengage from the toothed surfaces 282 and 284 of the extension 216.

The use of the extension 216 increases flexibility and employment of pipe support in accordance with the present invention, allowing supporting of pipes at a variety of heights, while still employing the same base 14.

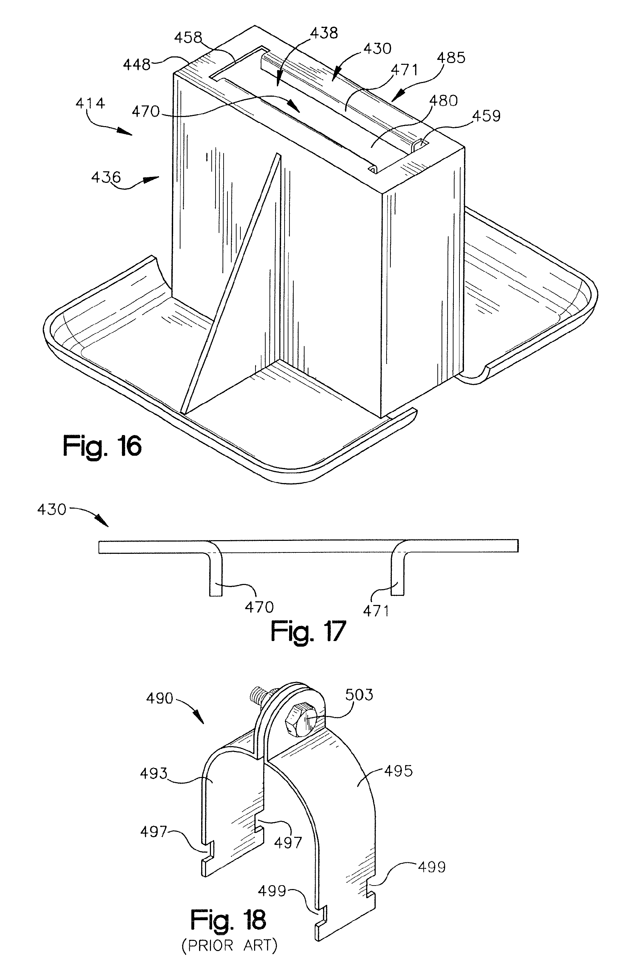

Fig. 16 shows another embodiment of the base 14, a base 414 that has an insert 430 molded into a protrusion 436. An end view of the insert 430 is shown in Fig. 17. The insert 430 which may be a metal insert such as a steel insert, is molded into the protrusion 436 such that there is a slot 438 in a flat top surface 448 of the protrusion 436 capable of receiving standard hardware (such as clamps) designed for placement in standard metal struts. Thus the slot 438 has a pair of openings 458 and 459 at either end into which ends of the hardware may be inserted. Folded-down or bent sides 470 and 471 of the insert 430 provide protrusions for retaining the hardware within the slot 438. The insert sides 470 and 471 do not touch a bottom surface 480 of the slot 438, but rather leave space, so that hardware inserted into the slot 438 in one of the openings 458 and 459 can be slid away from the opening and secured into an engagement portion 485 of the slot 438. The insert sides 470 and 471 thus function as rails. In the engagement portion 485 of the slot 438, the hardware is prevented from being pulled out of the slot 438 by the sides 470 and 471.

Other parts of the base 414 may be similar to those of the base 14 (Fig. 3). The base 414 may be main plastic, with the plastic molded around the metal insert 430.

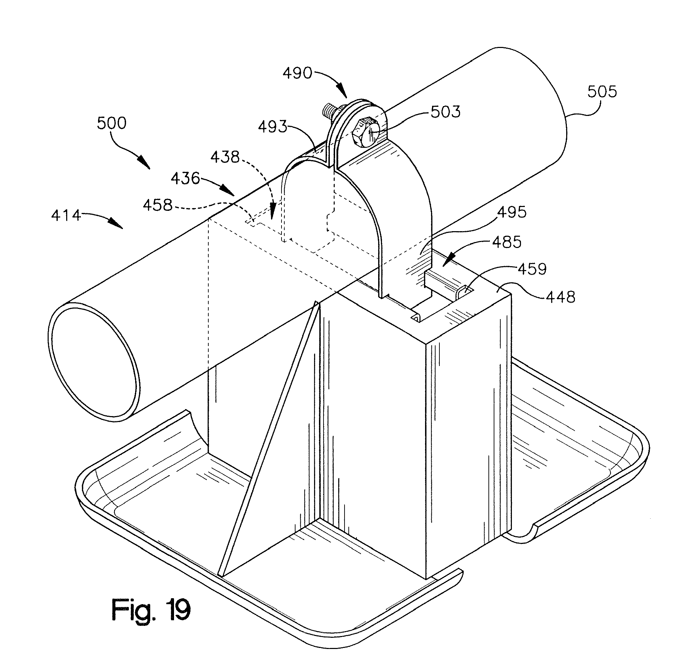

Fig. 18 shows an example of suitable hardware for engaging the slot 438, a prior art conduit clamp 490. The clamp 490 may inserted into and secured within the slot 438, as shown in Fig. 19. The clamp has two halves 493 and 495, which may be separately inserted in the openings 458 and 459 in the slot 438. The halves 493 and 495 have cutouts 497 and 499 through which the insert sides 470 and 471 pass as the halves 493 and 495 are moved into the engagement portion 485 of the slot 438. The halves 493 and 495 may be secured together with a suitable fastener 503, such as a screw, bolt, or rivet. The clamp 490 and the base 436 combine to form a pipe support 500 to secure a pipe or conduit 505 against the surface 448 of the protrusion 436.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A pipe support comprising:
a base having a planar bottom and a protrusion extending from the planar bottom; and
a clamp that separably engages the base;
wherein the base and the clamp have respective rigid pipe-receiving surfaces for securing one or more pipes in a pipe-receiving region between the surfaces.

2. The pipe support of claim 1,
wherein the clamp includes a bar, and a pair of legs attached to the bar; and
wherein the legs separably engage opposite sides of the protrusion to secure the clamp to the base.

3. The pipe support of claim 2, wherein the legs have toothed inner surfaces that engage respective toothed outer surfaces of the protrusion.

4. The pipe support of claim 3,
wherein the toothed inner surfaces of the legs and the toothed outer surfaces of the base all have asymmetric teeth;
wherein the asymmetric teeth are configured so as to allow the toothed inner surfaces of the legs to slide against the toothed outer surfaces of the protrusion as the pipe-receiving surfaces are brought together;
wherein the asymmetric teeth are configured to lock the toothed inner surfaces of the legs against the toothed outer surfaces of the protrusion as the pipe-receiving surfaces are moved apart;
wherein the asymmetric teeth of the toothed inner surfaces of the legs have upper surfaces substantially perpendicular to the legs; and
wherein the asymmetric teeth of the toothed outer surfaces of the protrusion have lower surfaces substantially perpendicular to the protrusion.

5. The pipe support of claim 3 or claim 4,
wherein the protrusion has channels about the toothed outer surfaces;
wherein the channels are in communication with openings of the protrusion into which the legs are inserted;
wherein the legs include grip tabs on outer surfaces thereof; and
wherein the openings are fully enclosed except for slots configured to let the grip tabs therethrough.

6. The pipe support of any of claims 1 to 5,
wherein the planar bottom includes an upturned outer edge; and
wherein the bottom has cutouts therein, providing drain passages for draining liquids off a top surface of the planar bottom.

7. The pipe support of any of claims 1 to 6, wherein the pipe-receiving surface of the protrusion has upturned, curved ends.

8. The pipe support of any of claims 1 to 7,
further comprising an extender coupled to a distal end of the protrusion; and
wherein the clamp engages outer surfaces of the extender.

9. The pipe support of any of claims 1 to 8, wherein the base and the clamp are molded pieces of plastic.

10. The pipe support of any of claims 1 to 9,
wherein the protrusion has one or more hollows therein; and
wherein the hollows each have an open bottom.

11. A method of securing one or more pipes using the pipe support of any of claims 1 to 10, the method comprising:
placing the pipes and the base of the pipe support such that the pipes are on a pipe-receiving surface of the base; and
separably engaging the base with the clamp of the pipe support, such that the pipes are secured between respective pipe-receiving surfaces of the base and the clamp.
